(19) Europäisches Patentamt
European Patent Office
Office européen des brevets

(11) **EP 4 485 112 A1**

(12) **EUROPEAN PATENT APPLICATION**

(43) Date of publication:
**01.01.2025 Bulletin 2025/01**

(21) Application number: **23181753.7**

(22) Date of filing: **27.06.2023**

(51) International Patent Classification (IPC):
**G05D 1/02** (2020.01)    **G06Q 10/08** (2024.01)

(52) Cooperative Patent Classification (CPC):
**G05D 1/2464; G05D 1/249; G05D 1/644;**
**G05D 1/693; G05D 1/6987;** G05D 2105/28;
G05D 2107/70; G05D 2109/10; G05D 2111/10;
G06Q 10/08

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **Wirnshofer, Florian**
  **80939 München (DE)**
• **Kast, Bernd**
  **89335 Ichenhausen (DE)**

(74) Representative: **Siemens Patent Attorneys**
**Postfach 22 16 34**
**80506 München (DE)**

(54) **METHOD AND SYSTEM FOR NAVIGATING AUTOMATED GUIDED VEHICLES OF AGV-FLEETS THROUGH CLUTTERED OPERATING AREAS BY A NON-GRAPH BASED NAVIGATION**

(57)    In order to navigate "Automated Guided Vehicle's <AGV's>" of AGV-fleets through cluttered operating areas by a non-graph based navigation, in which the navigation is self-optimized and in which a cost map (CM) of an operating area (OA), in particular an industrial shopfloor, indicating whether the operating area (OA) is blocked statically by obstacles (OBS) for at least one "Automated Guided Vehicle" ($AGV_x$, $AGV_y$) of "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) belonging to an AGV-fleet ($FL_{AGV}$) is deployed (dpi) to plan a route ($RT_x$, $RT_y$) for the at least one "Automated Guided Vehicle" ($AGV_x$, $AGV_y$) within the operating area (OA) for getting from a starting point ($SP_x$, $SP_y$) to a destination point ($DP_x$, $DP_y$), it is proposed to compute (cpt) for the at least one "Automated Guided Vehicle" ($AGV_x$, $AGV_y$) each a cost map overlay ($CMO_x$, $CMO_y$), which is extending or modifying the cost map (CM) by considering at least one of obstructions (OBSR) as moveable obstacles and AGV-congestions within the operating area (OA) and which is used dynamically, locally in a distributed manner, to replan the route ($RT_x$, $RT_y$) of the at least one "Automated Guided Vehicle" ($AGV_x$, $AGV_y$) by creating a motion plan ($MPL_x$, $MPL_y$) for the at least one "Automated Guided Vehicle" ($AGV_x$, $AGV_y$) based on an extended or modified cost map (CM') considering both the cost map overlay ($CMO_x$, $CMO_y$) and the cost map (CM) and to get from the starting point ($SP_x$, $SP_y$) to the destination point ($DP_x$, $DP_y$).

FIG 1

| FIG 1A | FIG 1B |
|---|---|

FIG 1A

# FIG 1B

**Description**

The invention refers to a method for navigating "Automated Guided Vehicle's <AGV's>" of AGV-fleets through cluttered operating areas by a non-graph based navigation according to the preamble claim 1 and a system for navigating "Automated Guided Vehicle's <AGV's>" of AGV-fleets through cluttered operating areas by a non-graph based navigation according to the preamble claim 9.

Modern industrial plants commonly use "Automated Guided Vehicle's <AGV's>" to supply in the industrial plant according to an operating area of the AGV's assembly lines of an assembly process with required material. Especially for these logistics use-cases free navigation instead of road-network-based approaches using a graph based navigation is on the rise.

In many situations, two or even more AGV's may be sent (i) along a same passage or path, e.g. a hallway, within the operating area or (**ii**) towards a same goal within the operating area, e.g. charging stations, busy pickup locations, etc. This can lead to congestions along the path, which in turn lead to a delay in a delivery.

There may also be external influences that cause delays in the delivery, e.g. when the ADV's can only move slower than expected. A reason for thus could be that the hallway may be partially blocked by some industry equipment or may be crowded with industry workers. Navigating through a cluttered environment significantly slows down the speed of the AGV's and delays the assembly process.

These congested and cluttered zones must be considered during planning as a delayed delivery, especially concerning a bottleneck component and/or high-priority good, can cause heavy losses in throughput and thereby revenue.

To address all this it is known from the prior art a rather a naive decentralized approach according to which each AGV of an AGV-fleet computes its own path, irrespective of the other AGV's. When following the path, other vehicles are considered as obstacles and/or obstructions, so that congestions might occur. Typically, the AGV's break and halt if the path is obstructed. They then wait until the path is free again because the obstacle or obstruction has disappeared or they try predefined escape schemes. It may take a considerable amount of time for the obstruction, the obstacle respectively the congestion to dissolve by chance. In the worst case, the AGV's are permanently locked in. In such a case, human or expert intervention is required to get the AGV's moving again. Also, no information is exchanged across the vehicles, i.e. for example, "hallway no.5 is blocked, consider an alternative route".

The prior art knows also an alternative approach which is based on centralized scheduling algorithms according to which some AGV-systems have a centralized intelligence, which schedules the routes of all AGV's. However, these systems do not make longer-term observations and/or analysis. They may be able to resolve a congestion by replanning each and every route for each and every AGV, but they cannot avoid or at least learn from the emergence of congestions and delays in certain areas of the shop floor.

Another strand of centralized algorithms can have a longer time horizon, but only operates on a predefined road networks and not for free-driving setups, which lacks the flexibility needed for many logistics applications.

It is an objective of the invention to propose a method and system for navigating "Automated Guided Vehicle's <AGV's>" of AGV-fleets through cluttered operating areas by a non-graph based navigation, in which the navigation is self-optimized.

To solve this objective of the invention has a certain importance, because there is a need of a scalable, e.g., distributed, method or system for traffic shaping, congestion avoidance and/or throughput optimization, which is applicable for AGV-fleets of AGV's that navigate based on grid maps.

The cited objective is solved with regard to a method defined in the preamble of claim 1 by the features in the characterizing part of claim 1.

Furthermore, the cited objective is solved with regard to a system defined in the preamble of claim 9 by the features in the characterizing part of claim 9.

The main idea of the invention according to the claims 1 and 9 in order to navigate "Automated Guided Vehicle's <AGV's>" of AGV-fleets through cluttered operating areas by a non-graph based navigation, in which a cost map of an operating area, in particular an industrial shopfloor, indicating whether the operating area is blocked statically by obstacles for at least one "Automated Guided Vehicle" of "Automated Guided Vehicles" belonging to an AGV-fleet is deployed to plan a route for the at least one "Automated Guided Vehicle" within the operating area for getting from a starting point to a destination point, it is proposed to compute for the at least one "Automated Guided Vehicle" each a cost map overlay, which is extending or modifying the cost map by considering at least one of obstructions as moveable obstacles and AGV-congestions within the operating area and which is used dynamically, locally in a distributed manner, to replan the route of the at least one "Automated Guided Vehicle" by creating a motion plan for the at least one "Automated Guided Vehicle" based on an extended or modified cost map considering both the cost map overlay and the cost map and to get from the starting point to the destination point.

In doing so there is realized the scalable e.g., distributed, approach for at least one of the traffic shaping, the congestion avoidance, the throughput optimization.

The scenario that is underlying the idea is that

- Real-world data of congestions is continuously made use of to adapt the AGVs' routes towards less crowded parts of the operating area and therefore faster earlier arrival at the target. This reduces potential waiting times and/or bottlenecks and therefore improves the throughput and thus save money compared to standard approaches known from the prior art. It does not necessarily require a central intelligence which promises scalability to large fleets of AGV's. So it is alternatively also possible that each AGV can continue to plan paths onboard, in a decentralized way.

- The data needed is already available. The realization requires nothing but a simple clustering algorithm and a straightforward modification of a cost map, which is cheap to realize, already state of the art and which indicate whether according to the map a part of the operating area is blocked by an obstacle, e.g., a wall, or not, so that the AGVs plan their routes based on such cost map. There are currently available engineering tools such as from "Agilox™" or "Omron™" displaying the cost maps.

So far so good, but according to the presented idea the cost map, which is in particular local, is extended by overlays, which are exchanged between the AGV's. The resulting cost map overlay, composed of the local cost map plus overlays, are used preferably locally, in a distributed manner, on the AGV's to compute the improved plans. The overlays can have a specified time range in which they are active so that dynamic overlays are possible. Certain overlays might be ignored or not applied, e.g. depending on the type or source of the overlay.

As sub-aspects of this scenario there are proposed several means to provide the overlays to the cost map:

(**1**) The overlay can be computed in a specific way based on data gathered from the AGV's, e.g. deviation from expected speed, increased cost along the planned path to inform other AGV's of the increased risk of congestions, high cost for ordinary AGV's along the planned path of high-priority AGV's so that they have a clear track.
(**2**) An external system or sensor can compute an overlay, e.g. motion sensor, 3rd party transport system, manually entered exclusion zone.
(4) Scheduled/Learned algorithms can provide predictions about possible performance degradations, e.g. higher traffic in certain areas during shift change or break times, blocking of some areas during regular maintenance and/or delivery of high priority goods.
(**5**) The distribution of the overlays can be either centralized, which means that all the AGV's send and receive all their data to a central server or decentralized, which means that the each AGV is communicating directly with neighboring or adjacent AGV's.

The behavior of the AGVs computing plans based on the modified cost map are superior to state of the art approaches as they:

- actively avoid congestions and thus increase throughput
- consider temporary speed impairments
- prioritize specific AGV's based on the relevance of their task, e.g. AGV's carrying important goods, which are bottlenecks to a production line or may cause complete halt if not delivered in time, by e.g. letting those AGV's pass or taking longer routes for disturbing AGV's to make space on the shortest path for those AGV's which should be prioritized.

Regarding (**1**) a specific realization works as follows:

**A.** In a training phase, all AGV's plan and follow their routes in the standard way. This will lead to congestions. During these congestions, an AGV "X" must reduce its velocity. An ACTUAL velocity the AGV "X" drives with is much lower than an initially INTENDED velocity.
This can be compared to a following road traffic scenario: Imagine a car driving along a freeway would be able to drive with 160 km/h but there was high unforeseen traffic, so the car only were able to drive with 110 km/h.
If, however, congestions occur, the actual velocity of the vehicle along the trajectory is much lower, as collisions must be prevented.

**B**. Each AGV records the deviation from its INTENDED velocity to the velocity it was ACTUALLY able to drive with.

**C**. The cost map is modified by recomputing such that the cost of cells (grids) when the cost map is based on the grid map, which are traversed frequently slower than intended gets increased. This can be achieved using a recursive mean update, wherein a motion planner uses the grid map for the motion planning. Each cell or grid contains classical collision costs and now in addition average congestion costs. Each time an AGV traverses a cell or grid a ratio

$$c = \alpha \left( 1 - \frac{actual\ velocity\ in\ cell}{desired\ velocity\ in\ cell} \right)$$

The ration c is then added to the cell's average congestion costs using the recursive mean update and possibly with a forgetting factor.
This means:

If a cell is frequently traversed at the intended speed, the congestion cost will converge to a zero value.

If a cell is frequently traversed much slower than initially intended, the cell gets assigned a higher cost.

As a result, the motion planner would be biased towards favoring less congested parts of the operating area.

This process is continuous and through the forgetting factor will automatically adapt to schedule changes.

**D**. The AGV's use the modified cost map to plan their routes. Parts of the operating area which previously observed many congestions have a higher cost now. Therefore, some of the AGV's will prefer a longer detour that has less cost map cost. As a result, AGV's are distributed much more across the shop floor and congestions occur less frequently.

Regarding (**2**) a specific realization works as follows:

An external system or sensor can compute an overlay. This could for example a motion sensor, a 3rd party transport system, a manually entered exclusion zone.

Overlays can also be provided using external sensors or even directly from edge-device sensors. These sensors register relevant changes in the environment. According to these registered changes, the overlay cost is adapted in specific regions.

- As an example, there could be a sensor, which monitors a zebra-crossing in the operating area, e.g. an industrial shopfloor. If the sensor registers a high number of crossings, e.g., during a shift change, it can provide an overlay which induces high costs around the zebra-crossing area. The AGV's would therefore avoid the crosswalk region as it would be quite likely that it would be forced to stop.

- Another sensor could be a localization-device for passive AGV's in the operating area, e.g. the shopfloor, i.e., AGV's that aren't part of the AGV-fleet. A sensor could for example be mounted on all human-driven forklifts. This sensor provides the location of the forklift. If the forklift blocks a hallway or an entrance to a part of the operating area respectively on the shopfloor, the overlay could be modified such that the AGV's stop attempting to select the blocked hallway for traversing the operating area respectively the shopfloor.

Regarding (**3**) a specific realization works as follows:

A higher-level system, which could detect regularities or animalities on the operating area respectively the shopfloor. This could be done using a data-driven approach, e.g., machine learning or through an a priori knowledge, e.g., data from a work shift scheduling system or a storage management system. If a storage management system provides data that for example some parts of the operating area respectively the shopfloor are or will soon be densely covered with pallets for logistics, one could assign high costs to these areas to avoid AGV's to drive into those regions.

Summary: The benefit of the idea according to the described scenario is that instead of ignoring all data available and using a standard cost map as according to the prior art, data on frequently occupied zones and occurring congestions is gathered to identify bottlenecks and avoid them through a minimally invasive real-time modification of the shared modified cost map.

There exist other navigation solutions, which consider other traffic when planning a good route, however these include Google Maps or TomTom, which are graph based solutions. However this only works for graph-based plan representations, e.g. street routes, and isn't appropriate for grid-based representations.

Further advantages arise out of additional developments of the invention according to the dependent claims.

According to an advantageous development of the presented idea (cf. claims 2 and 10) the cost map overlay is computed decentrally by the at least one "Automated Guided Vehicle" on the basis of at least one of operating area related sensor data detected by at least some of the "Automated Guided Vehicles" and transmitted to the at least one "Automated Guided Vehicle" and at least one more computed cost map overlay to the cost map overlay being self-distributed among the at least one "Automated Guided Vehicle". Thereby it is beneficial (cf. claims 3 and 11) when the sensor data are transmitted wirelessly and the at least one more computed cost map overlay is self-distributed wirelessly according to a wireless communication network, which is preferably a wireless mesh network, formed by the "Automated Guided Vehicles" of the AGV-fleet.

According to a further beneficial development of the presented idea (cf. claims 4 and 12) the cost map overlay is computed centrally by a server outside of the "Automated Guided Vehicles" on the basis of at least one of operating area related sensor data detected by the "Automated Guided Vehicles" and transmitted to the server, which distributes the computed cost map overlay to the at least one "Automated Guided Vehicle" and at least one more computed cost map overlay to the cost map overlay being retransmitted from the at least one "Automated Guided Vehicle" to the server. Thereby it is advantageous (cf. claims 6 and 14) when the transmission of the sensor data and the distribution of the computed cost map overlay take place via a wireless communication.

Moreover according to an additional advantageous development of the presented idea (cf. claims 5 and 13) the cost map overlay is computed centrally by a server outside of the "Automated Guided Vehicles" on the basis of operating area related, external sensor data detected by an external sensor and transmitted to the server, which distributes the computed cost map overlay to the at least one "Automated Guided Vehicle". Thereby it is advantageous (cf. claims 6 and 14) when the transmission of the sensor data and the distribution of the computed cost map overlay take place via a wireless communication.

Furthermore, it is of a particular advantage according to the claims 7 and 15 that the cost map overlay is computed in the course of data-driven approach by scheduled and/or machine learned algorithms based predictions or a priori knowledge about possible performance degradations of the operation area, e.g. at least one of higher traffic in certain sub-areas during shift change or break times, blocking of some sub-areas during regular maintenance and delivery of high priority goods, through detecting regularities or abnormalities due to data retrieved from a shift scheduling system or storage maintenance system.

In addition it is beneficial (cf. claims 8 and 16) that a grid map of the operating area is implemented in the course of replanning the route of the at least one "Automated Guided Vehicle" by creating the motion plan for the at least one "Automated Guided Vehicle" to shape a traffic within the operating area, to avoid the AGV-congestions within the operating area and/or to optimize a throughput within the operating area.

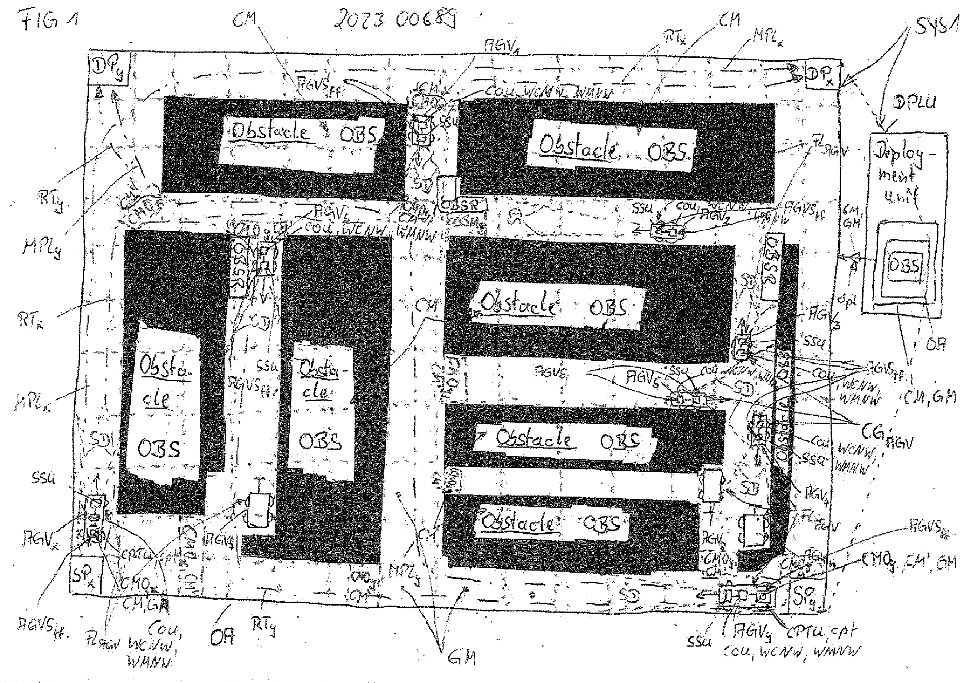

Besides the above, advantageous further developments of the invention arise out of the following description of a preferred embodiment of the invention according to FIGURES 1 to 3. They show:

FIGURE 1 a first system for navigating "Automated Guided Vehicle's <AGV's>" of AGV-fleets through cluttered operating areas by non-graph based navigation for decentrally computing cost map overlays

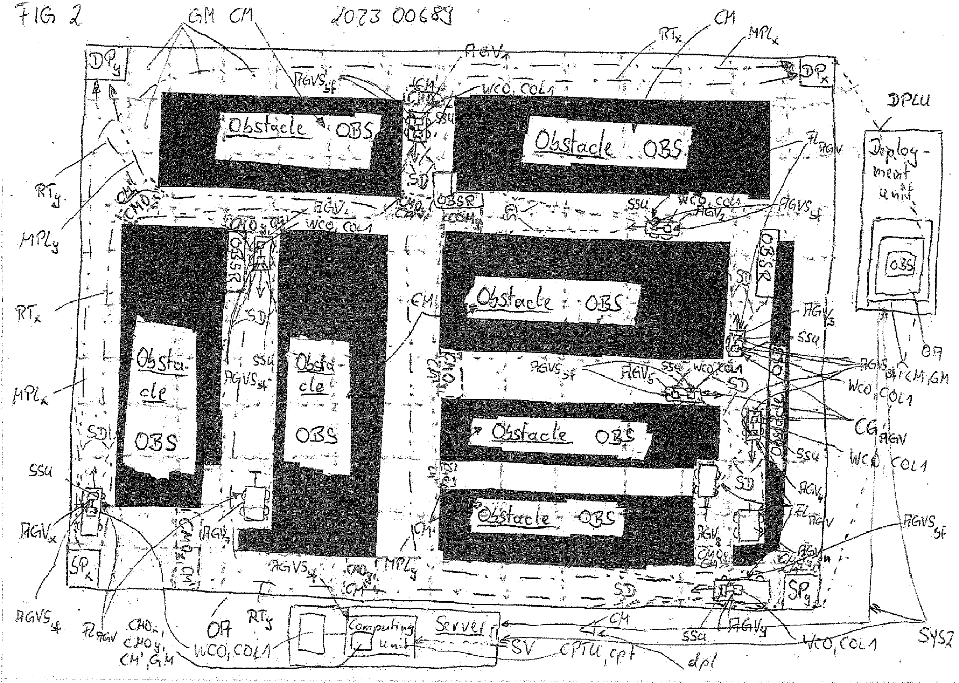

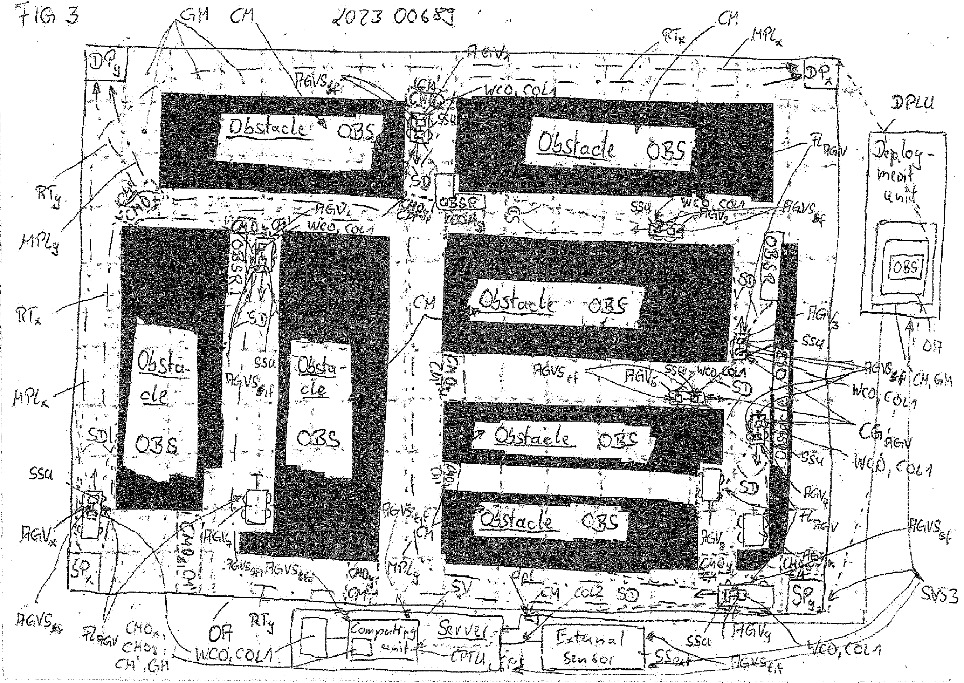

FIGURE 2 a second system for navigating "Automated Guided Vehicle's <AGV's>" of AGV-fleets through cluttered operating areas by non-graph based navigation for centrally computing cost map overlays based on AGV-detected sensor data, FIGURE 3 a third system for navigating "Automated Guided Vehicle's <AGV's>" of AGV-fleets through cluttered operating areas by non-graph based navigation for centrally computing cost map overlays based on externally detected sensor data.

FIGURE 1 shows a first system SYS1 for navigating "Automated Guided Vehicle's <AGV's>" of AGV-fleets through cluttered operating areas by non-graph based navigation for decentrally computing cost map overlays. The first system SYS1 is formed by an operating area OA for "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ belonging to an AGV-fleet $FL_{AGV}$ and a deployment unit DPLU. ,

The operating area OA is preferably an industrial shopfloor but could be alternatively or also the operation area of any other domain than industry domain, in which the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ navigate through to find a path within the operating area OA for getting from any starting point to any destination point. By doing this the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ are finding situations within the operating area OA, by which the "Automated Guided Vehicles" are prevented from reaching the intended destination point easily in direct ways and in mostly short times. Such situations could be evoked generally by obstacles, obstruction and congestions. An obstacle is usually a fixed object within the operating area OA, whereas an obstruction is a temporarily existing, moveable object within the operating area OA.

The operating area OA of the first system SYS1 contains besides the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ many obstacles OBS and some obstructions OBSR which could evoke the cited situations when the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ navigate through the operating area OA. In this context the operating area OA is a cluttered area. The obstructions OBSR with respect to the AGV-movements are in the present case for example moveable industrial goods and actual stationary "Automated Guided Vehicles" which are according to the FIGURE 1 a seventh "Automated Guided Vehicle" $AGV_7$, an eighth "Automated Guided Vehicle" $AGV_8$ and a n-th "Automated Guided Vehicle" $AGV_n$.

Regarding the operating area OA itself and the obstacles OBS being located in the operating area OA there are existing a cost map CM and a grid map GM, which are stored in the deployment unit DPLU. Both, the cost map CM and the grid map GM are well-known tools in connection with systems of navigating vehicles as such, which have not to be described in detail.

With regard to the depicted first system SYS1 the grid map GM is a network of evenly spaced horizontal and vertical lines that is used to identify locations in the operating area OA, whereas the cost map CM is a special grid map where each cell or grid is assigned a specific value or cost in such that higher costs indicate a smaller distance between the "Automated Guided Vehicle" and the obstacle OBS. Cost maps are used in path-finding planning tools which uses a series of different algorithms to find the shortest path while avoiding obstacles.

In the present case the cost map CM indicates whether the operating area OA is blocked statically by obstacles OBS for at least one "Automated Guided Vehicle" $AGV_x$, $AGV_y$ of the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ belonging to the AGV-fleet $FL_{AGV}$ and it is deployed dpl by the deployment unit DPLU in order to plan a route $RT_x$, $RT_y$ for the at least one "Automated Guided Vehicle" $AGV_x$, $AGV_y$ within the operating area OA for getting from a starting point $SP_x$, $SP_y$ to a destination point $DP_x$, $DP_y$.

So, a primary "Automated Guided Vehicle" $AGV_x$ wants to move from a primary starting point $SP_x$ to a primary a destination point $DP_x$, whereas a secondary "Automated Guided Vehicle" $AGV_y$ wants to move from a secondary starting point $SP_y$ to a secondary a destination point $DP_y$. Thus for the primary "Automated Guided Vehicle" $AGV_x$ a primary route $RT_x$ is planned by the deployed cost map CM, whereas for the secondary "Automated Guided Vehicle" $AGV_y$ a secondary route $RT_y$ is planned by the deployed cost map CM.

Both, the cost map CM and the grid map GM are deployed dpi preferably via wireless communication in general to the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ of the operating area OA and in particular to the primary and secondary "Automated Guided Vehicles" $AGV_x$, $AGV_y$.

However, for the primary and secondary "Automated Guided Vehicles" $AGV_x$, $AGV_y$ to navigate through the cluttered operating area OA by a non-graph based navigation it is often not sufficient to lonely use or rely on the information of the cost map CM. For this purpose in particular the primary and secondary "Automated Guided Vehicles" $AGV_x$, $AGV_y$ and more generally all "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ of the operating area OA include the following onboard units a computing unit CPTU, a sensing unit SSU and a communication unit COU. However due to the dedicated consideration of the primary and secondary "Automated Guided Vehicles" $AGV_x$, $AGV_y$ to navigate through the cluttered operating area OA only the computing unit CPTU of them is depicted in the FIGURE 1.

Due to a replanning of the primary route $RT_x$ the computing unit CPTU of the primary "Automated Guided Vehicle" $AGV_x$ forms a first-functional AGV-subsystem $AGVS_{ff}$ with - the sensing unit SSU of each of at least some of the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$, which are according to the FIGURE 1 a first "Automated Guided Vehicle" $AGV_1$, a second "Automated Guided Vehicle" $AGV_2$, a third "Automated Guided Vehicle" $AGV_3$, a fourth "Automated Guided Vehicle" $AGV_4$, a fifth "Automated Guided Vehicle" $AGV_5$ and a sixth "Automated Guided Vehicle" $AGV_6$, and

- the communication unit COU of each the at least some "Automated Guided Vehicles" $AGV_1$, $AGV_2$, $AGV_3$, $AGV_4$, $AGV_5$, $AGV_6$.

In the same way due to a replanning of the secondary route $RT_y$ the computing unit CPTU of the secondary "Automated Guided Vehicle" $AGV_y$ forms a first-functional AGV-subsystem $AGVS_{ff}$ with

- the sensing unit SSU of each of at least some of the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$, which are again according to the FIGURE 1 the first "Automated Guided Vehicle" $AGV_1$, the second "Automated Guided Vehicle" $AGV_2$, the third "Automated Guided Vehicle" $AGV_3$, the fourth "Automated Guided Vehicle" $AGV_4$, the fifth "Automated Guided Vehicle" $AGV_5$ and the sixth "Automated Guided Vehicle" $AGV_6$, and

- the communication unit COU of each the at least some "Automated Guided Vehicles" $AGV_1$, $AGV_2$, $AGV_3$, $AGV_4$, $AGV_5$, $AGV_6$.

For the replanning of the primary route $RT_x$ the computing unit CPTU of the primary "Automated Guided Vehicle" $AGV_x$ decentrally computes cpt a primary cost map overlay $CMO_x$, which is extending or modifying the cost map CM by considering at least one of obstructions OBSR as moveable obstacles and AGV-congestions $CG_{ACV}$ within the operating area OA and which is used dynamically, locally in a distributed manner.

The computation is based on operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ and transmitted via the at least one communication unit COU to the primary "Automated Guided Vehicle" $AGV_x$.

So, according the FIGUR 1 the sensor data SD of the first to the fourth "Automated Guided Vehicle" $AGV_1$, ..., $AGV_4$ and the sixth "Automated Guided Vehicle" $AGV_6$ include information about the obstruction OBSR in the form of moveable industrial goods and actual stationary "Automated Guided Vehicles" given by the seventh "Automated Guided Vehicle" $AGV_7$, the eighth "Automated Guided Vehicle" $AGV_8$ and the n-th "Automated Guided Vehicle" $AGV_n$, whereas the fifth "Automated Guided Vehicle" $AGV_5$ include information about an AGV-congestion $CG_{AGV}$ in the operating area OA evoked by the third "Automated Guided Vehicle" $AGV_3$, the fourth "Automated Guided Vehicle" $AGV_4$ and the fifth "Automated Guided Vehicle" $AGV_5$.

By the cited replanning of the primary route $RT_x$ the computing unit CPTU of the primary "Automated Guided Vehicle" $AGV_x$ creates a primary motion plan $MPL_x$ for the primary "Automated Guided Vehicle" $AGV_x$ based on an extended or modified cost map CM' considering both the primary cost map overlay $CMO_x$ and the cost map CM and to get from the primary starting point $SP_x$ to the primary destination point $DP_x$.

By the created primary motion plan $MPL_x$ the primary "Automated Guided Vehicle" $AGV_x$ is leaded through the operating area OA from the primary starting point $SP_x$ to the primary destination point $DP_x$ in such a way that according to depiction in the FIGURE 1 the primary "Automated Guided Vehicle" $AGV_x$ can only follow a route through the operating area OA which is given by the primary motion plan $MPL_x$. This means that

deviation from this route by taking possible other ways are prohibited. In the FIGURE 1 this is depicted along the route of the primary motion plan $MPL_x$ by dash-lined boxes referenced to route blocking points represented by the primary cost map overlay $CMO_x$ and the extended or modified cost map $CM'$.

For the replanning of the secondary route $RT_y$ the computing unit CPTU of the secondary "Automated Guided Vehicle" $AGV_y$ decentrally computes cpt a secondary cost map overlay $CMO_y$, which is extending or modifying again the cost map CM by considering at least one of obstructions OBSR as moveable obstacles and AGV-congestions $CG_{ACV}$ within the operating area OA and which again is used dynamically, locally in a distributed manner.

The computation is based on operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ and transmitted via the at least one communication unit COU to the secondary "Automated Guided Vehicle" $AGV_y$.

So also here, according the FIGUR 1 the sensor data SD of the first to the fourth "Automated Guided Vehicle" $AGV_1$, ..., $AGV_4$ and the sixth "Automated Guided Vehicle" $AGV_6$ include information about the obstruction OBSR in the form of moveable industrial goods and actual stationary "Automated Guided Vehicles" given by the seventh "Automated Guided Vehicle" $AGV_7$, the eighth "Automated Guided Vehicle" $AGV_8$ and the n-th "Automated Guided Vehicle" $AGV_n$, whereas the fifth "Automated Guided Vehicle" $AGV_5$ include information about an AGV-congestion $CG_{ACV}$ in the operating area OA evoked by the third "Automated Guided Vehicle" $AGV_3$, the fourth "Automated Guided Vehicle" $AGV_4$ and the fifth "Automated Guided Vehicle" $AGV_5$.

By the cited replanning of the secondary route $RT_y$ the computing unit CPTU of the secondary "Automated Guided Vehicle" $AGV_y$ creates a secondary motion plan $MPL_y$ for the secondary "Automated Guided Vehicle" $AGV_y$ based on an extended or modified cost map $CM'$ considering both the secondary cost map overlay $CMO_y$ and the cost map CM and to get from the secondary starting point $SP_y$ to the secondary destination point $DP_y$.

By the created secondary motion plan $MPL_y$ the secondary "Automated Guided Vehicle" $AGV_y$ is leaded through the operating area OA from the secondary starting point $SP_y$ to the secondary destination point $DP_y$ in such a way that according to depiction in the FIGURE 1 the secondary "Automated Guided Vehicle" $AGV_y$ can only follow a route through the operating area OA which is given by the secondary motion plan $MPL_y$. This means that deviation from this route by taking possible other ways are prohibited. In the FIGURE 1 this is depicted along the route of the secondary motion plan $MPL_y$ by dash-lined boxes referenced to route blocking points represented by the secondary cost map overlay $CMO_y$ and the extended or modified cost map $CM'$.

The used term "in a distributed manner" above at two places with respect to the computed primary cost map overlay $CMO_x$ and the computed secondary cost map overlay $CMO_y$ thereby means that the computed primary cost map overlay $CMO_x$ and the computed secondary cost map overlay $CMO_y$ do not or could not affect each other by a corresponding distribution of the cost map overlays so that both, the primary "Automated Guided Vehicle" $AGV_x$ and the secondary "Automated Guided Vehicle" $AGV_y$, can be navigated through the cluttered operating area more or less optimal.

To reach this goal it is beneficial regarding the computation of the primary cost map overlay $CMO_x$ that either in addition to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ at least the secondary cost map overlay $CMO_y$, which is self-distributed among the primary and the secondary "Automated Guided Vehicle" $AGV_x$, $AGV_y$ via the communication unit COU, is used for the computation of the primary cost map overlay $CMO_x$ or alternatively to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ at least the secondary cost map overlay $CMO_y$, which is self-distributed among the primary and the secondary "Automated Guided Vehicle" $AGV_x$, $AGV_y$ via the communication unit COU, is used lonely for the computation of the primary cost map overlay $CMO_x$.

Vice versa to reach this goal it is further beneficial regarding the computation of the secondary cost map overlay $CMO_y$ that either in addition to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ at least the primary cost map overlay $CMO_x$, which is self-distributed among the primary and the secondary "Automated Guided Vehicle" $AGV_x$, $AGV_y$ via the communication unit COU, is used for the computation of the secondary cost map overlay $CMO_y$ or alternatively to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ at least the primary cost map overlay $CMO_x$, which is self-distributed among the primary and the secondary "Automated Guided Vehicle" $AGV_x$, $AGV_y$ via the communication unit COU, is used lonely for the computation of the secondary cost map overlay $CMO_y$.

In all afore-presented options the communication unit COU of the first-functional AGV-subsystem $AGVS_{ff}$ is designed such that the sensor data SD are transmitted wirelessly and the at least one more computed cost map overlay $CMO_x$, $CMO_y$ is self-distributed wirelessly according to a wireless communication network WCNW, which is preferably a wireless mesh network WMNW, formed by the primary and secondary "Automated Guided Vehicles" $AGV_x$, $AGV_y$ of the AGV-fleet $FL_{AGV}$.

Moreover the computing unit CPTU in the server SV of the first system SYS1 is designed such that the primary and secondary cost map overlay $CMO_x$, $CMO_y$ is computed cpt in the course of data-driven approach by scheduled and/or machine learned algorithms based predictions or a priori knowledge about possible performance degradations of the operation area OA, e.g. at least one of higher traffic in certain sub-areas during shift change or break times, blocking of some sub-areas during regular maintenance and delivery of high priority goods, through detecting regularities or abnormalities due to data retrieved from a shift scheduling system or storage maintenance system.

Furthermore the computing unit CPTU in the server SV of the first system SYS1 is designed such that the grid map GM of the operating area OA is implemented ipl in the course of replanning the primary and secondary route $RT_x$, $RT_y$ of the primary and secondary "Automated Guided Vehicle" $AGV_x$, $AGV_y$ by creating the primary and secondary motion plan $MPL_x$, $MPL_y$ for the primary and secondary "Automated Guided Vehicle" $AGV_x$, $AGV_y$ to shape a traffic within the operating area OA, to avoid the AGV-congestions $CG_{ACV}$ within the operating area OA and/or to optimize a throughput within the operating area OA.

FIGURE 2 shows a second system SYS2 for navigating "Automated Guided Vehicle's <AGV's>" of AGV-fleets through cluttered operating areas by non-graph based navigation for decentrally computing cost map overlays. The second system SYS2 is formed by an operating area OA for "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ belonging to an AGV-fleet $FL_{AGV}$, a deployment unit DPLU and a server SV, which is connected with the deployment unit DPLU and which includes an interface for wireless communication WCO.

The operating area OA is again preferably an industrial shopfloor but could be alternatively or also the operation area of any other domain than industry domain, in which the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ navigate through to find a path within the operating area OA for getting from any starting point to any destination point. By doing this the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ are finding situations within the operating area OA, by which the "Automated Guided Vehicles" are prevented from reaching the intended destination point easily in direct ways and in mostly short times. Such situations could be evoked generally by obstacles, obstruction and congestions. An obstacle is usually a fixed object within the operating area OA, whereas an obstruction is a temporarily existing, moveable object within the operating area OA.

The operating area OA of the second system SYS2 contains again besides the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ many obstacles OBS and some obstructions OBSR which could evoke the cited situations when the "Automated Guided Vehicles" $AGV_x$, $AGV_2$, $AGV_3$, $AGV_4$, $AGV_5$, $AGV_6$, $AGV_7$, $AGV_8$, ..., $AGV_x$, $AGV_y$, ..., $AGV_n$ navigate through the operating area OA. In this context the operating area OA is a cluttered area. The obstructions OBSR with respect to the AGV-movements are in the present case for example moveable industrial goods and actual stationary "Automated Guided Vehicles" which are again according to the FIGURE 2 as in the FIGURE 1 a seventh "Automated Guided Vehicle" $AGV_7$, an eighth "Automated Guided Vehicle" $AGV_8$ and a n-th "Automated Guided Vehicle" $AGV_n$.

Regarding the operating area OA itself and the obstacles OBS being located in the operating area OA there are existing a cost map CM and a grid map GM, which are stored in the deployment unit DPLU. Both, the cost map CM and the grid map GM are well-known tools in connection with systems of navigating vehicles as such, which have not to be described in detail.

With regard to the depicted second system SYS2 the grid map GM is a network of evenly spaced horizontal and vertical lines that is used to identify locations in the operating area OA, whereas the cost map CM is a special grid map where each cell or grid is assigned a specific value or cost in such that higher costs indicate a smaller distance between the "Automated Guided Vehicle" and the obstacle OBS. Cost maps are used in path-finding planning tools which uses a series of different algorithms to find the shortest path while avoiding obstacles.

In the present case the cost map CM indicates whether the operating area OA is blocked statically by obstacles OBS for at least one "Automated Guided Vehicle" $AGV_x$, $AGV_y$ of the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ belonging to the AGV-fleet $FL_{AGV}$ and it is deployed dpl by the deployment unit DPLU in order to plan a route $RT_x$, $RT_y$ for the at least one "Automated Guided Vehicle" $AGV_x$, $AGV_y$ within the operating area OA for getting from a starting point $SP_x$, $SP_y$ to a destination point $DP_x$, $DP_y$.

So again as in the FIGURE 1, a primary "Automated Guided Vehicle" $AGV_x$ wants to move from a primary starting point $SP_x$ to a primary a destination point $DP_x$, whereas a secondary "Automated Guided Vehicle" $AGV_y$ wants to move from a secondary starting point $SP_y$ to a secondary a destination point $DP_y$. Thus for the primary "Automated Guided Vehicle" $AGV_x$ a primary route $RT_x$ is planned by the deployed cost map CM, whereas for the secondary "Automated Guided Vehicle" $AGV_y$ a secondary route $RT_y$ is planned by the deployed cost map CM.

Both, the cost map CM and the grid map GM are deployed dpi preferably via wireless communication in general to the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ of the operating area OA and in particular to the primary and secondary "Automated Guided Vehicles" $AGV_x$, $AGV_y$.

However, for the primary and secondary "Automated Guided Vehicles" $AGV_x$, $AGV_y$ to navigate through the cluttered operating area OA by a non-graph based navigation it is often not sufficient to lonely use or rely on the information of the cost map CM. For this purpose in particular the primary and secondary "Automated Guided Vehicles" $AGV_x$, $AGV_y$ and more generally all "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ of the operating area OA include the following onboard units a sensing unit SSU and as the server SV an interface for wireless communication WCO, so that the primary and secondary "Automated Guided Vehicles" $AGV_x$, $AGV_y$ respectively all the other "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ are communicatively linked by a first communication link COL1 with the server SV via the wireless communication WCO of the server SV.

Besides the cited onboard unit in the primary and secondary "Automated Guided Vehicles" $AGV_x$, $AGV_y$ respectively in all the other "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ there is again - as in the first system SYS1 according to the FIGURE 1 - a computing unit CPTU, which in contrast to the first system SYS1 is now part of or integrated in the server SV, where computing unit CPTU is internally connected with the wireless communication WCO of the server SV and thus also connected with the primary and secondary "Automated Guided Vehicles" $AGV_x$, $AGV_y$ respectively all the other "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$.

Due to all this and due to a replanning of the primary route $RT_x$ the computing unit CPTU of the server SV forms a secondary, functional AGV-subsystem $AGVS_{sf}$ with the sensing unit SSU of each of at least some of the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$, which are according to the FIGURE 2 as in the FGURE 1 a first "Automated Guided Vehicle" $AGV_1$, a second "Automated Guided Vehicle" $AGV_2$, a third "Automated Guided Vehicle" $AGV_3$, a fourth "Automated Guided Vehicle" $AGV_4$, a fifth "Automated Guided Vehicle" $AGV_5$ and a sixth "Automated Guided Vehicle" $AGV_6$.

In the same way due to all this and due to a replanning of the secondary route $RT_y$ the computing unit CPTU of the server SV forms a secondary, functional AGV-subsystem $AGVS_{sf}$ with the sensing unit SSU of each of at least some of the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$, which are according to the FIGURE 2 as in the FGURE 1 a first "Automated Guided Vehicle" $AGV_1$, a second "Automated Guided Vehicle" $AGV_2$, a third "Automated Guided Vehicle" $AGV_3$, a fourth "Automated Guided Vehicle" $AGV_4$, a fifth "Automated Guided Vehicle" $AGV_5$ and a sixth "Automated Guided Vehicle" $AGV_6$.

For the replanning of the primary route $RT_x$ the computing unit CPTU of the server SV centrally computes cpt a primary cost map overlay $CMO_x$, which is extending or modifying the cost map CM by considering at least one of obstructions OBSR as moveable obstacles and AGV-congestions $CG_{ACV}$ within the operating area OA and which is used dynamically, locally in a distributed manner.

The computation is based on operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ and transmitted via the first communication link COL1 to the server SV, which distributes the computed primary cost map overlay $CMO_x$ via the first communication link COL1 to the primary "Automated Guided Vehicle" $AGV_x$.

So, according the FIGUR 2 as in the FIGURE 1 the sensor data SD of the first to the fourth "Automated Guided Vehicle" $AGV_1$, ..., $AGV_4$ and the sixth "Automated Guided Vehicle" $AGV_6$ include information about the obstruction OBSR in the form of moveable industrial goods and actual stationary "Automated Guided Vehicles" given by the seventh "Automated Guided Vehicle" $AGV_7$, the eighth "Automated Guided Vehicle" $AGV_8$ and the n-th "Automated Guided Vehicle" $AGV_n$, whereas the fifth "Automated Guided Vehicle" $AGV_5$ include information about an AGV-congestion $CG_{AGV}$ in the operating area OA evoked by the third "Automated Guided Vehicle" $AGV_3$, the fourth "Automated Guided Vehicle" $AGV_4$ and the fifth "Automated Guided Vehicle" $AGV_5$.

By the cited replanning of the primary route $RT_x$ the computing unit CPTU of the server SV creates a primary motion plan $MPL_x$ for the primary "Automated Guided Vehicle" $AGV_x$ based on an extended or modified cost map CM' considering both the primary cost map overlay $CMO_x$ and the cost map CM and to get from the primary starting point $SP_x$ to the primary destination point $DP_x$.

By the created primary motion plan $MPL_x$ the primary "Automated Guided Vehicle" $AGV_x$ is leaded again through the operating area OA from the primary starting point $SP_x$ to the primary destination point $DP_x$ in such a way that according to depiction in the FIGURE 2 the primary "Automated Guided Vehicle" $AGV_x$ can only follow a route through the operating area OA which is given by the primary motion plan $MPL_x$. This means that deviation from this route by taking possible other ways are prohibited. In the FIGURE 2 this is depicted again along the route of the primary motion plan $MPL_x$ by dash-lined boxes referenced to route blocking points represented by the primary cost map overlay $CMO_x$ and the

extended or modified cost map CM'.

For the replanning of the secondary route $RT_y$ the computing unit CPTU of the server SV centrally computes cpt a secondary cost map overlay $CMO_y$, which is extending or modifying again the cost map CM by considering at least one of obstructions OBSR as moveable obstacles and AGV-congestions $CG_{ACV}$ within the operating area OA and which again is used dynamically, locally in a distributed manner.

The computation is based on operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ and transmitted via the first communication link COL1 to the server SV, which distributes the computed secondary cost map overlay $CMO_y$ via the first communication link COL1 to the secondary "Automated Guided Vehicle" $AGV_y$.

So also here, according the FIGUR 2 as in the FIGURE 1 the sensor data SD of the first to the fourth "Automated Guided Vehicle" $AGV_1$, ..., $AGV_4$ and the sixth "Automated Guided Vehicle" $AGV_6$ include information about the obstruction OBSR in the form of moveable industrial goods and actual stationary "Automated Guided Vehicles" given by the seventh "Automated Guided Vehicle" $AGV_7$, the eighth "Automated Guided Vehicle" $AGV_8$ and the n-th "Automated Guided Vehicle" $AGV_n$, whereas the fifth "Automated Guided Vehicle" $AGV_5$ include information about an AGV-congestion $CG_{AGV}$ in the operating area OA evoked by the third "Automated Guided Vehicle" $AGV_3$, the fourth "Automated Guided Vehicle" $AGV_4$ and the fifth "Automated Guided Vehicle" $AGV_5$.

By the cited replanning of the secondary route $RT_y$ the computing unit CPTU of the server SV creates a secondary motion plan $MPL_y$ for the secondary "Automated Guided Vehicle" $AGV_y$ based on an extended or modified cost map CM' considering both the secondary cost map overlay $CMO_y$ and the cost map CM and to get from the secondary starting point $SP_y$ to the secondary destination point $DP_y$.

By the created secondary motion plan $MPL_y$ the secondary "Automated Guided Vehicle" $AGV_y$ is leaded again through the operating area OA from the secondary starting point $SP_y$ to the secondary destination point $DP_y$ in such a way that according to depiction in the FIGURE 2 the secondary "Automated Guided Vehicle" $AGV_y$ can only follow a route through the operating area OA which is given by the secondary motion plan $MPL_y$. This means that deviation from this route by taking possible other ways are prohibited. In the FIGURE 2 this is depicted again along the route of the secondary motion plan $MPL_y$ by dash-lined boxes referenced to route blocking points represented by the secondary cost map overlay $CMO_y$ and the extended or modified cost map CM'.

Again - as in the description of the FIGURE 1 - the used term "in a distributed manner" above at two places with respect to the computed primary cost map overlay $CMO_x$ and the computed secondary cost map overlay $CMO_y$ thereby means that the computed primary cost map overlay $CMO_x$ and the computed secondary cost map overlay $CMO_y$ do not or could not affect each other by a corresponding distribution of the cost map overlays so that both, the primary "Automated Guided Vehicle" $AGV_x$ and the secondary "Automated Guided Vehicle" $AGV_y$, can be navigated through the cluttered operating area more or less optimal.

To reach this goal it is beneficial regarding the computation of the primary cost map overlay $CMO_x$ that <u>either</u> in addition to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ the secondary cost map overlay $CMO_y$, which is retransmitted from the secondary "Automated Guided Vehicle" $AGV_y$ via the first communication link COL1 to the server SV, is used for the computation of the primary cost map overlay $CMO_x$ <u>or</u> alternatively to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ the secondary cost map overlay $CMO_y$, which is retransmitted from the secondary "Automated Guided Vehicle" $AGV_y$ via the first communication link COL1 to the server SV, is used lonely for the computation of the primary cost map overlay $CMO_x$.

Due to the retransmitted secondary cost map overlay $CMO_y$ the server SV can in an arbitrary way to combine the retransmitted secondary cost map overlay $CMO_y$ with the primary cost map overlay $CMO_x$ and to redistribute the combined cost map overlay via the first communication link COL1 to the primary "Automated Guided Vehicle" $AGV_x$.

Vice versa to reach this goal it is further beneficial regarding the computation of the secondary cost map overlay $CMO_y$ that <u>either</u> in addition to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ the primary cost map overlay $CMO_x$, which is retransmitted from the primary "Automated Guided Vehicle" $AGV_x$ via the first communication link COL1 to the server SV, is used for the computation of the secondary cost map overlay $CMO_y$ <u>or</u> alternatively to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ the primary cost map overlay $CMO_x$, which is retransmitted from the primary "Automated Guided Vehicle" $AGV_x$ via the first communication link COL1 to the server SV, is used lonely for the computation of the secondary cost map overlay $CMO_y$.

Due to the retransmitted primary cost map overlay $CMO_x$ the server SV can in an arbitrary way to combine the retransmitted primary cost map overlay $CMO_x$ with the secondary cost map overlay $CMO_y$ and to redistribute the combined cost map overlay via the first communication link COL1 to the secondary "Automated Guided Vehicle" $AGV_y$.

Moreover the computing unit CPTU in the server SV of the second system SYS2 is again designed such that the primary and secondary cost map overlay $CMO_x$, $CMO_y$ is computed cpt in the course of data-driven approach by scheduled and/or machine learned algorithms based predictions or a priori knowledge about possible performance degradations of the operation area OA, e.g. at least one of higher traffic in certain sub-areas during shift change or break times, blocking of some sub-areas during regular maintenance and delivery of high priority goods, through detecting regularities or abnormalities due to data retrieved from a shift scheduling system or storage maintenance system.

Furthermore the computing unit CPTU in the server SV of the second system SYS2 is again designed such that the grid map GM of the operating area OA is implemented ipl in the course of replanning the primary and secondary route $RT_x$, $RT_y$ of the primary and secondary "Automated Guided Vehicle" $AGV_x$, $AGV_y$ by creating the primary and secondary motion plan $MPL_x$, $MPL_y$ for the primary and secondary "Automated Guided Vehicle" $AGV_x$, $AGV_y$ to shape a traffic within the operating area OA, to avoid the AGV-congestions $CG_{ACV}$ within the operating area OA and/or to optimize a throughput within the operating area OA.

FIGURE 3 shows a third system SYS3 for navigating "Automated Guided Vehicle's <AGV's>" of AGV-fleets through cluttered operating areas by non-graph based navigation for centrally computing cost map overlays based on externally detected sensor data. The third system SYS2 is formed by an operating area OA for "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ belonging to an AGV-fleet $FL_{AGV}$, a deployment unit DPLU, a server SV, which is connected with the deployment unit DPLU and which includes an interface for wireless communication WCO, and an external sensor $SS_{ext}$, which is communicatively linked by a second communication link COL2 with the server SV.

The operating area OA is again preferably an industrial shopfloor but could be alternatively or also the operation area of any other domain than industry domain, in which the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ navigate through to find a path within the operating area OA for getting from any starting point to any destination point. By doing this the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ are finding situations within the operating area OA, by which the "Automated Guided Vehicles" are prevented from reaching the intended destination point easily in direct ways and in mostly short times. Such situations could be evoked generally by obstacles, obstruction and congestions. An obstacle is usually a fixed object within the operating area OA, whereas an obstruction is a temporarily existing, moveable object within the operating area OA.

The operating area OA of the third system SYS3 contains again besides the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ many obstacles OBS and some obstructions OBSR which could evoke the cited situations when the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ navigate through the operating area OA. In this context the operating area OA is a cluttered area. The obstructions OBSR with respect to the AGV-movements are in the present case for example moveable industrial goods and actual stationary "Automated Guided Vehicles" which are again according to the FIGURE 3 as in the FIGURE 1 a seventh "Automated Guided Vehicle" $AGV_7$, an eighth "Automated Guided Vehicle" $AGV_8$ and a n-th "Automated Guided Vehicle" $AGV_n$.

Regarding the operating area OA itself and the obstacles OBS being located in the operating area OA there are existing a cost map CM and a grid map GM, which are stored in the deployment unit DPLU. Both, the cost map CM and the grid map GM are well-known tools in connection with systems of navigating vehicles as such, which have not to be described in detail.

With regard to the depicted third system SYS2 the grid map GM is a network of evenly spaced horizontal and vertical lines that is used to identify locations in the operating area OA, whereas the cost map CM is a special grid map where each cell or grid is assigned a specific value or cost in such that higher costs indicate a smaller distance between the "Automated Guided Vehicle" and the obstacle OBS. Cost maps are used in path-finding planning tools which uses a series of different algorithms to find the shortest path while avoiding obstacles.

In the present case the cost map CM indicates whether the operating area OA is blocked statically by obstacles OBS for at least one "Automated Guided Vehicle" $AGV_x$, $AGV_y$ of the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ belonging to the AGV-fleet $FL_{AGV}$ and it is deployed dpl by the deployment unit DPLU in order to plan a route $RT_x$, $RT_y$ for the at least one "Automated Guided Vehicle" $AGV_x$, $AGV_y$ within the operating area OA for getting from a starting point $SP_x$, $SP_y$ to a destination point $DP_x$, $DP_y$.

So again as in the FIGURE 1, a primary "Automated Guided Vehicle" $AGV_x$ wants to move from a primary starting point $SP_x$ to a primary a destination point $DP_x$, whereas a secondary "Automated Guided Vehicle" $AGV_y$ wants to move from a secondary starting point $SP_y$ to a secondary a destination point $DP_y$. Thus for the primary "Automated Guided Vehicle" $AGV_x$ a primary route $RT_x$ is planned by the deployed cost map CM, whereas for the secondary "Automated Guided Vehicle" $AGV_y$ a secondary route $RT_y$ is planned by the deployed cost map CM.

Both, the cost map CM and the grid map GM are deployed dpi preferably via wireless communication in general to the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ of the operating area OA and in particular to the primary and secondary "Automated Guided Vehicles" $AGV_x$, $AGV_y$.

However, for the primary and secondary "Automated Guided Vehicles" $AGV_x$, $AGV_y$ to navigate through the cluttered operating area OA by a non-graph based navigation it is often not sufficient to lonely use or rely on the information of the cost map CM. For this purpose in particular the primary and secondary "Automated Guided Vehicles" $AGV_x$, $AGV_y$ and more generally all "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ of the operating area OA include the following onboard units a sensing unit SSU and as the server SV an interface for wireless communication WCO, so that the primary and secondary "Automated Guided Vehicles" $AGV_x$, $AGV_y$ respectively all the other "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ are communicatively linked by a first communication link COL1 with the server SV via the wireless communication WCO of the server SV.

Besides the cited onboard unit in the primary and secondary "Automated Guided Vehicles" $AGV_x$, $AGV_y$ respectively in all the other "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$ there is again - as in the first system SYS1 according to the FIGURE 1 - a computing unit CPTU, which in contrast to the first system SYS1 is now part of or integrated in the server SV, where computing unit CPTU is internally connected with the wireless communication WCO of the server SV and thus also connected with the primary and secondary "Automated Guided Vehicles" $AGV_x$, $AGV_y$ respectively all the other "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$.

Due to all this and due to a replanning of the primary route $RT_x$ the computing unit CPTU of the server SV forms a secondary, functional AGV-subsystem $AGVS_{sf}$ with the sensing unit SSU of each of at least some of the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$, which are according to the FIGURE 3 as in the FGURE 1 a first "Automated Guided Vehicle" $AGV_1$, a second "Automated Guided Vehicle" $AGV_2$, a third "Automated Guided Vehicle" $AGV_3$, a fourth "Automated Guided Vehicle" $AGV_4$, a fifth "Automated Guided Vehicle" $AGV_5$ and a sixth "Automated Guided Vehicle" $AGV_6$.

In the same way due to all this and due to a replanning of the secondary route $RT_y$ the computing unit CPTU of the server SV forms again a secondary, functional AGV-subsystem $AGVS_{sf}$ with the sensing unit SSU of each of at least some of the "Automated Guided Vehicles" $AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$, which are according to the FIGURE 3 as in the FGURE 1 a first "Automated Guided Vehicle" $AGV_1$, a second "Automated Guided Vehicle" $AGV_2$, a third "Automated Guided Vehicle" $AGV_3$, a fourth "Automated Guided Vehicle" $AGV_4$, a fifth "Automated Guided Vehicle" $AGV_5$ and a sixth "Automated Guided Vehicle" $AGV_6$.

For the replanning of the primary route $RT_x$ the computing unit CPTU of the server SV centrally computes cpt a primary cost map overlay $CMO_x$, which is extending or modifying the cost map CM by considering at least one of obstructions OBSR as moveable obstacles and AGV-congestions $CG_{ACV}$ within the operating area OA and which is used dynamically, locally in a distributed manner.

The computation is based on operating area related sensor data SD detected by the at least sensing unit SSU of the at least some "Automated Guided Vehicles" $AGV_3$, $AGV_2$, $AGV_3$, $AGV_4$, $AGV_5$, $AGV_6$ and transmitted via the first communication link COL1 to the server SV, which distributes the computed primary cost map overlay $CMO_x$ via the first communication link COL1 to the primary "Automated Guided Vehicle" $AGV_x$.

So, according the FIGUR 3 as in the FIGURE 1 the sensor data SD of the first to the fourth "Automated Guided Vehicle" $AGV_1$, ..., $AGV_4$ and the sixth "Automated Guided Vehicle" $AGV_6$ include information about the obstruction OBSR in the form of moveable industrial goods and actual stationary "Automated Guided Vehicles" given by the seventh "Automated Guided Vehicle" $AGV_7$, the eighth "Automated Guided Vehicle" $AGV_8$ and the n-th "Automated Guided Vehicle" $AGV_n$, whereas the fifth "Automated Guided Vehicle" $AGV_5$ include information about an AGV-congestion $CG_{AGV}$ in the operating area OA evoked by the third "Automated Guided Vehicle" $AGV_3$, the fourth "Automated Guided Vehicle" $AGV_4$ and the fifth "Automated Guided Vehicle" $AGV_5$.

By the cited replanning of the primary route $RT_x$ the computing unit CPTU of the server SV creates a primary motion plan $MPL_x$ for the primary "Automated Guided Vehicle" $AGV_x$ based on an extended or modified cost map CM' considering both the primary cost map overlay $CMO_x$ and the cost map CM and to get from the primary starting point $SP_x$ to the primary destination point $DP_x$.

By the created primary motion plan $MPL_x$ the primary "Automated Guided Vehicle" $AGV_x$ is leaded again through the operating area OA from the primary starting point $SP_x$ to the primary destination point $DP_x$ in such a way that according to depiction in the FIGURE 3 the primary "Automated Guided Vehicle" $AGV_x$ can only follow a route through the operating area OA which is given by the primary motion plan $MPL_x$. This means that deviation from this route by taking possible other ways are prohibited. In the FIGURE 3 this is depicted again along the route of the primary motion plan $MPL_x$ by dash-

lined boxes referenced to route blocking points represented by the primary cost map overlay $CMO_x$ and the extended or modified cost map CM'.

For the replanning of the secondary route $RT_y$ the computing unit CPTU of the server SV centrally computes cpt a secondary cost map overlay $CMO_y$, which is extending or modifying again the cost map CM by considering at least one of obstructions OBSR as moveable obstacles and AGV-congestions $CG_{ACV}$ within the operating area OA and which again is used dynamically, locally in a distributed manner.

The computation is based on operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ and transmitted via the first communication link COL1 to the server SV, which distributes the computed secondary cost map overlay $CMO_y$ via the first communication link COL1 to the secondary "Automated Guided Vehicle" $AGV_y$.

So also here, according the FIGUR 3 as in the FIGURE 1 the sensor data SD of the first to the fourth "Automated Guided Vehicle" $AGV_1$, ..., $AGV_4$ and the sixth "Automated Guided Vehicle" $AGV_6$ include information about the obstruction OBSR in the form of moveable industrial goods and actual stationary "Automated Guided Vehicles" given by the seventh "Automated Guided Vehicle" $AGV_7$, the eighth "Automated Guided Vehicle" $AGV_8$ and the n-th "Automated Guided Vehicle" $AGV_n$, whereas the fifth "Automated Guided Vehicle" $AGV_5$ include information about an AGV-congestion $CG_{AGV}$ in the operating area OA evoked by the third "Automated Guided Vehicle" $AGV_3$, the fourth "Automated Guided Vehicle" $AGV_4$ and the fifth "Automated Guided Vehicle" $AGV_5$.

By the cited replanning of the secondary route $RT_y$ the computing unit CPTU of the server SV creates a secondary motion plan $MPL_y$ for the secondary "Automated Guided Vehicle" $AGV_y$ based on an extended or modified cost map CM' considering both the secondary cost map overlay $CMO_y$ and the cost map CM and to get from the secondary starting point $SP_y$ to the secondary destination point $DP_y$.

By the created secondary motion plan $MPL_y$ the secondary "Automated Guided Vehicle" $AGV_y$ is leaded again through the operating area OA from the secondary starting point $SP_y$ to the secondary destination point $DP_y$ in such a way that according to depiction in the FIGURE 3 the secondary "Automated Guided Vehicle" $AGV_y$ can only follow a route through the operating area OA which is given by the secondary motion plan $MPL_y$. This means that deviation from this route by taking possible other ways are prohibited. In the FIGURE 3 this is depicted again along the route of the secondary motion plan $MPL_y$ by dash-lined boxes referenced to route blocking points represented by the secondary cost map overlay $CMO_y$ and the extended or modified cost map CM'.

Again - as in the description of the FIGURE 1 - the used term "in a distributed manner" above at two places with respect to the computed primary cost map overlay $CMO_x$ and the computed secondary cost map overlay $CMO_y$ thereby means that the computed primary cost map overlay $CMO_x$ and the computed secondary cost map overlay $CMO_y$ do not or could not affect each other by a corresponding distribution of the cost map overlays so that both, the primary "Automated Guided Vehicle" $AGV_x$ and the secondary "Automated Guided Vehicle" $AGV_y$, can be navigated through the cluttered operating area more or less optimal.

To reach this goal it is again beneficial regarding the computation of the primary cost map overlay $CMO_x$ that <u>either</u> in addition to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ the secondary cost map overlay $CMO_y$, which is retransmitted from the secondary "Automated Guided Vehicle" $AGV_y$ via the first communication link COL1 to the server SV, is used for the computation of the primary cost map overlay $CMO_x$ <u>or</u> alternatively to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ the secondary cost map overlay $CMO_y$, which is retransmitted from the secondary "Automated Guided Vehicle" $AGV_y$ via the first communication link COL1 to the server SV, is used lonely for the computation of the primary cost map overlay $CMO_x$.

Due to the retransmitted secondary cost map overlay $CMO_y$ the server SV can in an arbitrary way to combine the retransmitted secondary cost map overlay $CMO_y$ with the primary cost map overlay $CMO_x$ and to redistribute the combined cost map overlay via the first communication link COL1 to the primary "Automated Guided Vehicle" $AGV_x$.

Vice versa to reach this goal it is again further beneficial regarding the computation of the secondary cost map overlay $CMO_y$ that <u>either</u> in addition to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ the primary cost map overlay $CMO_x$, which is retransmitted from the primary "Automated Guided Vehicle" $AGV_x$ via the first communication link COL1 to the server SV, is used for the computation of the secondary cost map overlay $CMO_y$ <u>or</u> alternatively to the used operating area related sensor data SD detected by the at least sensing unit SSU of the at least some "Automated Guided Vehicles" $AGV_1$, $AGV_2$, $AGV_3$, $AGV_4$, $AGV_5$, $AGV_6$ the primary cost map overlay $CMO_x$, which is retransmitted from the primary "Automated Guided Vehicle" $AGV_x$ via the first communication link COL1 to the server SV, is used lonely for the computation of the secondary cost map overlay $CMO_y$.

Due to the retransmitted primary cost map overlay $CMO_x$ the server SV can in an arbitrary way to combine the retransmitted primary cost map overlay

CMO$_x$ with the secondary cost map overlay CMO$_y$ and to redistribute the combined cost map overlay via the first communication link COL1 to the secondary "Automated Guided Vehicle" AGV$_y$.

In addition to all that and as an improvement of the second system SYS2 in the third system SYS3 the server SV with computing unit CPTU forms a third-functional AGV-subsystem AGVS$_{tf}$ with the external sensor SS$_{ext}$, wherein the centrally computed primary and secondary cost map overlay CMO$_x$, CMO$_y$ is additionally computed cpt on the basis of operating area related, external sensor data SD$_{ext}$ detected by the external sensor SS$_{ext}$ and transmitted via the second communication link COL2 to the server SV, which distributes the computed primary and secondary cost map overlay CMO$_x$, CMO$_y$ accordingly to the primary and secondary "Automated Guided Vehicle" AGV$_x$, AGV$_y$.

By this way, when the external sensor SS$_{ext}$ is a camera which monitors a passage such as a "pedestrian crosswalk" of the operating area OA, which is not explicitly shown in the FIGURE 3, the server SV could add blocking cost map overlays to the passage whenever the external sensor SS$_{ext}$ respectively the camera registers many persons using the passage respectively the "pedestrian crosswalk", e.g. due to lunch break, when many people moving a similar way to the food court at lunch time. This way, during high-use times, e.g. the lunch break, the primary and secondary "Automated Guided Vehicle" AGV$_x$, AGV$_y$ could be biased away by the server SV connected with the external sensor SS$_{ext}$ respectively the camera from using this part of the operating area OA.

Moreover the computing unit CPTU in the server SV of the third system SYS3 is again designed such that the primary and secondary cost map overlay CMO$_x$, CMO$_y$ is computed cpt in the course of data-driven approach by scheduled and/or machine learned algorithms based predictions or a priori knowledge about possible performance degradations of the operation area OA, e.g. at least one of higher traffic in certain sub-areas during shift change or break times, blocking of some sub-areas during regular maintenance and delivery of high priority goods, through detecting regularities or abnormalities due to data retrieved from a shift scheduling system or storage maintenance system.

Furthermore the computing unit CPTU in the server SV of the third system SYS3 is again designed such that the grid map GM of the operating area OA is implemented ipl in the course of replanning the primary and secondary route RT$_x$, RT$_y$ of the primary and secondary "Automated Guided Vehicle" AGV$_x$, AGV$_y$ by creating the primary and secondary motion plan MPL$_x$, MPL$_y$ for the primary and secondary "Automated Guided Vehicle" AGV$_x$, AGV$_y$ to shape a traffic within the operating area OA, to avoid the AGV-congestions CG$_{AGV}$ within the operating area OA and/or to optimize a throughput within the operating area OA.

## Claims

1. Method for navigating "Automated Guided Vehicle's <AGV's>" of AGV-fleets through cluttered operating areas by a non-graph based navigation, in which a cost map (CM) of an operating area (OA), in particular an industrial shopfloor, indicating whether the operating area (OA) is blocked statically by obstacles (OBS) for at least one "Automated Guided Vehicle" (AGV$_x$, AGV$_y$) of "Automated Guided Vehicles" (AGV$_1$, AGV$_2$, AGV$_3$, AGV$_4$, AGV$_5$, AGV$_6$, AGV$_7$, AGV$_8$, ..., AGV$_x$, AGV$_y$, ..., AGV$_n$) belonging to an AGV-fleet (FL$_{AGV}$) is deployed (dpl) in order to plan a route (RT$_x$, RT$_y$) for the at least one "Automated Guided Vehicle" (AGV$_x$, AGV$_y$) within the operating area (OA) for getting from a starting point (SP$_x$, SP$_y$) to a destination point (DP$_x$, DP$_y$), **characterized by**:
computing (cpt) for the at least one "Automated Guided Vehicle" (AGV$_x$, AGV$_y$) each a cost map overlay (CMO$_x$, CMO$_y$), which is extending or modifying the cost map (CM) by considering at least one of obstructions (OBSR) as moveable obstacles and AGV-congestions within the operating area (OA) and which is used dynamically, locally in a distributed manner, to replan the route (RT$_x$, RT$_y$) of the at least one "Automated Guided Vehicle" (AGV$_x$, AGV$_y$) by creating a motion plan (MPL$_x$, MPL$_y$) for the at least one "Automated Guided Vehicle" (AGV$_x$, AGV$_y$) based on an extended or modified cost map (CM') considering both the cost map overlay (CMO$_x$, CMO$_y$) and the cost map (CM) and to get from the starting point (SP$_x$, SP$_y$) to the destination point (DP$_x$, DP$_y$).

2. Method according to claim 1, **characterized in that** the cost map overlay (CMO$_x$, CMO$_y$) is computed (cpt) decentrally by the at least one "Automated Guided Vehicle" (AGV$_x$, AGV$_y$) on the basis of at least one of operating area related sensor data (SD) detected by at least some of the "Automated Guided Vehicles" (AGV$_1$, AGV$_2$, AGV$_3$, AGV$_4$, AGV$_5$, AGV$_6$, AGV$_7$, AGV$_8$, ..., AGV$_x$, AGV$_y$, ..., AGV$_n$) and transmitted to the at least one "Automated Guided Vehicle" (AGV$_x$, AGV$_y$) and at least one more computed cost map overlay to the cost map overlay (CMO$_x$, CMO$_y$) being self-distributed among the at least one "Automated Guided Vehicle" (AGV$_x$, AGV$_y$).

3. Method according to claim 2, **characterized in that** the sensor data (SD) are transmitted wirelessly and the at least one more computed cost map overlay is self-distributed wirelessly according to a wireless communication network (WCNW), in particular a wireless mesh network (WMNW), formed by the "Automated Guided Vehicles" (AGV$_1$, AGV$_2$, AGV$_3$, AGV$_4$, AGV$_5$, AGV$_6$, AGV$_7$, AGV$_8$, ..., AGV$_x$, AGV$_y$, ..., AGV$_n$) of the AGV-fleet (FL$_{AGV}$).

4. Method according to claim 1, **characterized in that** the cost map overlay ($CMO_x$, $CMO_y$) is computed (cpt) centrally by a server (SV) outside of the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) on the basis of at least one of operating area related sensor data (SD) detected by the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) and transmitted to the server (SV), which distributes the computed cost map overlay ($CMO_x$, $CMO_y$) to the at least one "Automated Guided Vehicle" ($AGV_x$, $AGV_y$), and at least one more computed cost map overlay to the cost map overlay ($CMO_x$, $CMO_y$) being retransmitted from the at least one "Automated Guided Vehicle" ($AGV_x$, $AGV_y$) to the server (SV).

5. Method according to claim 1 or 4, **characterized in that** the cost map overlay ($CMO_x$, $CMO_y$) is computed (cpt) centrally by a server (SV) outside of the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) on the basis of operating area related, external sensor data ($SD_{ext}$) detected by an external sensor ($SS_{ext}$) and transmitted to the server (SV), which distributes the computed cost map overlay ($CMO_x$, $CMO_y$) to the at least one "Automated Guided Vehicle" ($AGV_x$, $AGV_y$).

6. Method according to claim 4 or 5, **characterized in that** the transmission of the sensor data (SD, $SD_{ext}$) and the distribution of the computed cost map overlay ($CMO_x$, $CMO_y$) take place via a wireless communication (WCO).

7. Method according to claim 1, **characterized in that** the cost map overlay ($CMO_x$, $CMO_y$) is computed (cpt) in the course of data-driven approach by scheduled and/or machine learned algorithms based predictions or a priori knowledge about possible performance degradations of the operation area (OA), e.g. at least one of higher traffic in certain sub-areas during shift change or break times, blocking of some sub-areas during regular maintenance and delivery of high priority goods, through detecting regularities or abnormalities due to data retrieved from a shift scheduling system or storage maintenance system.

8. Method according to one of the claims 1 to 7, **characterized in that** a grid map (GM) of the operating area (OA) is implemented (ipl) in the course of replanning the route ($RT_x$, $RT_y$) of the at least one "Automated Guided Vehicle" ($AGV_x$, $AGV_y$) by creating the motion plan ($MPL_x$, $MPL_y$) for the at least one "Automated

Guided Vehicle" ($AGV_x$, $AGV_y$) to shape a traffic within the operating area (OA), to avoid the AGV-congestions ($CG_{AGV}$) within the operating area (OA) and/or to optimize a throughput within the operating area (OA).

9. System (SYS1, SYS2, SYS3) for navigating "Automated Guided Vehicle's <AGV's>" of AGV-fleets through cluttered operating areas by a non-graph based navigation with a deployment unit (DPLU), which deploys (dpl) a cost map (CM) of an operating area (OA), in particular an industrial shopfloor, indicating whether the operating area (OA) is blocked statically by obstacles (OBS) for at least one "Automated Guided Vehicle" ($AGV_x$, $AGV_y$) of "Automated Guided Vehicles" ($AGV_x$, $AGV_2$, $AGV_3$, $AGV_4$, $AGV_5$, $AGV_6$, $AGV_7$, $AGV_8$, ..., $AGV_x$, $AGV_y$, ..., $AGV_n$) belonging to an AGV-fleet ($FL_{AGV}$) in order to plan a route ($RT_x$, $RT_y$) for the at least one "Automated Guided Vehicle" ($AGV_x$, $AGV_y$) within the operating area (OA) for getting from a starting point ($SP_x$, $SP_y$) to a destination point ($DP_x$, $DP_y$),
**characterized by:**
a computing unit (CPTU) computing (cpt) for the at least one "Automated Guided Vehicle" ($AGV_x$, $AGV_y$) each a cost map overlay ($CMO_x$, $CMO_y$), which is extending or modifying the cost map (CM) by considering at least one of obstructions (OBSR) as moveable obstacles and AGV-congestions ($CG_{AGV}$) within the operating area (OA) and which is used dynamically, locally in a distributed manner, to replan the route ($RT_x$, $RT_y$) of the at least one "Automated Guided Vehicle" ($AGV_x$, $AGV_y$) by creating a motion plan ($MPL_x$, $MPL_y$) for the at least one "Automated Guided Vehicle" ($AGV_x$, $AGV_y$) based on an extended or modified cost map (CM') considering both the cost map overlay ($CMO_x$, $CMO_y$) and the cost map (CM) and to get from the starting point ($SP_x$, $SP_y$) to the destination point ($DP_x$, $DP_y$).

10. System (SYS1, SYS2, SYS3) according to claim 9, **characterized in that** the computing unit (CPTU) <i> is integrated in the at least one "Automated Guided Vehicle" ($AGV_x$, $AGV_y$), <ii> forms a first-functional AGV-subsystem ($AGVS_{ff}$) with a sensing unit (SSU) of each of at least some of the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) and a communication unit (COU) of each of the at least some of the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) and <iii> is designed such that the cost map overlay ($CMO_x$, $CMO_y$) is computed (cpt) decentrally by the at least one "Automated Guided Vehicle" ($AGV_x$, $AGV_y$) on the basis of at least one of operating area related sensor data (SD) detected by the at least one sensing unit (SSU) and transmitted via the at least one communication unit (COU) to the at least one "Automated Guided Vehicle" ($AGV_x$, $AGV_y$) and at least one more computed cost map overlay to the cost map overlay ($CMO_x$, $CMO_y$) being self-distributed among the at least one "Automated Guided Vehicle" ($AGV_x$, $AGV_y$) via the communication unit (COU) .

11. System (SYS1, SYS2, SYS3) according to claim 10, **characterized in that** the communication unit (COU) of the first-functional AGV-subsystem ($AGVS_{ff}$) is designed such that the sensor data (SD) are transmitted wirelessly and the at least one more computed cost map overlay is self-distributed wirelessly according to a wireless communication network (WCNW), in particular a wireless mesh network (WMNW), formed by the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) of the AGV-fleet ($FL_{AGV}$).

12. System (SYS1, SYS2, SYS3) according to claim 9, **characterized in that** the computing unit (CPTU) <i> is integrated in a server (SV) outside of the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) being communicatively linked by a first communication link (COL1) with the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$), <ii> forms a second-functional AGV-subsystem ($AGVS_{sf}$) with a sensing unit (SSU) of each of at least some of the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) and <iii> is designed such that the cost map overlay ($CMO_x$, $CMO_y$) is computed (cpt) centrally by a server (SV) outside of the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) on the basis of at least one of operating area related sensor data (SD) detected by the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) and transmitted via the first communication link (COL1) to the server (SV), which distributes the computed cost map overlay ($CMO_x$, $CMO_y$) via the first communication link (COL1) to the at least one "Automated Guided Vehicle" ($AGV_x$, $AGV_y$) and at least one more computed cost map overlay to the cost map overlay ($CMO_x$, $CMO_y$) being retransmitted from the at least one "Automated Guided Vehicle" ($AGV_x$, $AGV_y$) via the first communication link (COL1) to the server (SV).

13. System (SYS1, SYS2, SYS3) according to claim 9 or 12, **characterized in that** the computing unit (CPTU) <i> is integrated in the server (SV) outside of the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) being communicatively linked by a second communication link (COL2) with an external sensor ($SS_{ext}$), <ii> forms a third-functional AGV-subsystem ($AGVS_{tf}$) with the external sensor ($SS_{ext}$) and <iii> is designed such that the cost map overlay ($CMO_x$, $CMO_y$) is computed (cpt) centrally by a server (SV) outside of the "Automated Guided Vehicles" ($AGV_1$, $AGV_2$, $AGV_3$, $AGV_4$, $AGV_5$, $AGV_6$, $AGV_7$, $AGV_8$, ..., $AGV_x$, $AGV_y$, ..., $AGV_n$) on the basis of operating area related, external sensor data ($SD_{ext}$) detected by an external sensor ($SS_{ext}$) and transmitted via the second communication link (COL2) to the server (SV), which distributes the computed cost map overlay ($CMO_x$, $CMO_y$) to the at least one "Automated Guided Vehicle" ($AGV_x$, $AGV_y$).

14. System (SYS1, SYS2, SYS3) according to claim 12 or 13, **characterized in that** the transmission of the sensor data (SD, $SD_{ext}$) take place via a wireless communication (WCO) on the communication links (COL1, COL2) and the distribution of the computed cost map overlay ($CMO_x$, $CMO_y$) take place via a wireless communication (WCO) on the first communication link (COL1).

15. System (SYS1, SYS2, SYS3) according to claim 9, **characterized in that** the computing unit (CPTU) is designed such that the cost map overlay ($CMO_x$, $CMO_y$) is computed (cpt) in the course of data-driven approach by scheduled and/or machine learned algorithms based predictions or a priori knowledge about possible performance degradations of the operation area (OA), e.g. at least one of higher traffic in certain sub-areas during shift change or break times, blocking of some sub-areas during regular maintenance and delivery of high priority goods, through detecting regularities or abnormalities due to data retrieved from a shift scheduling system or storage maintenance system.

16. System (SYS1, SYS2, SYS3) according to one of the claims 9 to 15, **characterized in that** the computing unit (CPTU) is designed such that a grid map (GM) of the operating area (OA) is implemented (ipl) in the course of replanning the route ($RT_x$, $RT_y$) of the at least one "Automated Guided Vehicle" ($AGV_x$, $AGV_y$) by creating the motion plan ($MPL_x$, $MPL_y$) for the at least one "Automated Guided Vehicle" ($AGV_x$, $AGV_y$) to shape a traffic within the operating area (OA), to avoid the AGV-congestions ($CG_{AGV}$) within the operating area (OA) and/or to optimize a throughput within the operating area (OA).

FIG 1

FIG 2

FIG 3

Europäisches
Patentamt

European
Patent Office

Office européen
des brevets

# EUROPEAN SEARCH REPORT

Application Number

**EP 23 18 1753**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/103286 A1 (WANG BINYU [HK] ET AL) 8 April 2021 (2021-04-08) * paragraphs [0023], [0024], [0027] – [0045]; figures 1,3-5 * | 1-16 | INV. G05D1/02 G06Q10/08 |
| X | CARDARELLI ELENA ET AL: "Cooperative cloud robotics architecture for the coordination of multi-AGV systems in industrial warehouses", MECHATRONICS, PERGAMON PRESS, OXFORD, GB, vol. 45, 12 May 2017 (2017-05-12), pages 1-13, XP085144428, ISSN: 0957-4158, DOI: 10.1016/J.MECHATRONICS.2017.04.005 * pages 3-9 * | 1-16 | |
| X | CN 114 967 711 A (JIANGSU JICUI QINGLIAN INTELLIGENT CONTROL TECH CO LTD) 30 August 2022 (2022-08-30) * abstract; figures 3,4 * | 1-16 | |
| X | CN 113 516 429 A (UNIV SOUTH CHINA TECH) 19 October 2021 (2021-10-19) * abstract; figure 4 * | 1-16 | TECHNICAL FIELDS SEARCHED (IPC) G05D G06Q G08G G01C |

The present search report has been drawn up for all claims

| Place of search | Date of completion of the search | Examiner |
|---|---|---|
| Munich | 20 November 2023 | Vañó Gea, Joaquín |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 1753

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2023

| Patent document cited in search report | Publication date | Patent family member(s) | Publication date |
|---|---|---|---|
| US 2021103286 A1 | 08-04-2021 | US 2021103286 A1<br>WO 2021062891 A1 | 08-04-2021<br>08-04-2021 |
| CN 114967711 A | 30-08-2022 | NONE | |
| CN 113516429 A | 19-10-2021 | NONE | |

EPO FORM P0459

For more details about this annex : see Official Journal of the European Patent Office, No. 12/82